# EUROPÄISCHE PATENTSCHRIFT

(11) **EP 1 439 360 B1**
(45) Veröffentlichungstag und Bekanntmachung des Hinweises auf die Patenterteilung: **15.08.2007**
(21) Anmeldenummer: 03405021.1
(22) Anmeldetag: 20.01.2003
(51) Int. Cl.: F27D 3/10, F27B 1/02, C04B 2/12, F27B 1/20

(54) **Verfahren zum Brennen eines mineralischen Materialgemischs**
Process for firing a mineral material mixture
Procédé pour calciner d'un mélange de matières minérales

(43) Veröffentlichungstag der Anmeldung: 21.07.2004
(73) Patentinhaber: Maerz Ofenbau AG, 8027 Zürich (CH)
(72) Erfinder: Piringer, Hannes, 5712 Beinwil am See (CH)
(74) Vertreter: Quehl, Horst Max

(56) Entgegenhaltungen:
- GB-A- 554 182
- US-A- 5 460 517
- PATENT ABSTRACTS OF JAPAN vol. 010, no. 350 (C-387), 26. November 1986 (1986-11-26) & JP 61 149409 A (NIPPON KOKAN KK), 8. Juli 1986 (1986-07-08)

## Beschreibung

Die Erfindung betrifft ein Verfahren zum Brennen eines mineralischen Materialgemischs unterschiedlicher Korngrösse in einer gasdurchströmten Schüttgutsäule, die durch Beschicken mindestens eines Schachtes eines Schachtofens ausgebildet wird und mit Abführung des gebrannten Produkts im Bodenbereich des Schachtes.

Die US 5'460'517 (EP 0 560 715) desselben Anmelders beschreibt einen Schachtofen zum Brennen von mineralischem Füllgut, wie z.B. Kalkstein, nach dem MAERZ-Gleichstrom-Regenerativ-Verfahren, über dessen Beschickungsvorrichtung zwei Materialgemische feinerer und gröberer Körnung abwechselnd einem radial inneren und einem radial äusseren Bereich von mindestens zwei kreiszylindrischen Schächten zugeführt werden. Auf diese Weise wird in den Ofenschächten mit verhältnismässig einfachen Mitteln über den Schachtquerschnitt eine befriedigende Korngrössenverteilung und folglich auch eine gleichmässige Verteilung der Verbrennungsluft erreicht, so dass ein im Wesentlichen gleichmässiger Brennvorgang und eine entsprechend gleichmässige Produktqualität erzielt werden. Aufwändig ist jedoch die zuvor erforderliche mechanische Trennung in zwei Materialgemische feinerer und gröberer Körnung. Die grundsätzliche Ausgestaltung solcher quer miteinander verbundenen Doppelschachtöfen mit kreisförmigem Querschnitt der Schächte ist ebenfalls aufwändig und teuer, so dass sie mit Schachtquerschnitten zwischen 7 und 18 m² nur für grössere Leistungen im Bereich von 300 bis 800 Tonnen pro Tag gebaut werden.

Für geringeren Leistungsbedarf und kleinere Schachtquerschnitte zwischen 2 und 6 m² kann eine kostengünstigere Bauweise mit rechteckiger Querschnittsform der beiden Schächte realisiert werden. Ein Hindernis für die Anwendung dieser einfacheren Bauweise für grössere Durchsatzleistungen von wesentlich mehr als 300 Tonnen pro Tag ist jedoch die bei grösseren Querschnittsabmessungen beim Beschicken stärker auftretende ungleiche und einseitige Verteilung der Korngrössen über den Schachtquerschnitt. Diese ungleiche Verteilung wird verursacht durch die beim Beschicken von einem Förderband aus über eine Wurfbahn oder beim Zuführen über eine Rutsche sich ergebende Entmischung der Korngrössen. Sie hat zur Folge, dass auch die Strömungswiderstände der Verbrennungsluft und damit die Temperaturen über den Querschnitt der Schüttgutsäule ungleichmässig verteilt sind. Somit ist mit solchen kostengünstigeren Schachtöfen bei grösserem Schachtquerschnitt eine gleichmässige Produktqualität nicht erzielbar.

Der Erfindung liegt die Aufgabe zugrunde, ein Verfahren der eingangs genannten Art zu finden, das mit verhältnismässig einfachen Mitteln eine gleichmässigere Gasdurchströmung der Schüttgutsäule und damit eine bessere bzw. gleichmässigere Produktqualität gewährleistet, so dass auch für grössere Schachtquerschnitte kostengünstigere Bauweisen mit länglicher oder rechteckförmiger Querschnittsform des jeweiligen Schachtes möglich sind, die bisher aufgrund der erforderlichen Produktqualität mit vertretbarem Aufwand nicht realisierbar waren.

Die Lösung der genannten Aufgabe erfolgt bei einem Verfahren der eingangs genannten Art erfindungsgemäss dadurch, dass eine beim Beschicken erfolgende gerichtete Entmischung mit zunehmender Korngrösse periodisch in ihrer Richtung geändert wird, so dass die gerichtete Korngrössenverteilung in der Schüttgutsäule schichtweise wechselt.

Im Folgenden wird die Erfindung an Hand der Zeichnungen näher erläutert. Es zeigt:
Fig.1 einen Vertikalschnitt durch einen der Schächte eines Doppelschachtofens mit einer vorbekannten Anordnung zum Beschicken des Ofens und mit einer schematischen Darstellung der Kornverteilung in seiner Schüttgutsäule,
Fig.2 einen Vertikalschnitt durch einen Doppelschachtofen zur Ausführung des erfindungsgemässen Verfahrens,
Fig.3 einen durch den linken Schacht des Doppelschachtofens nach Fig.2 und seine Beschickungskammer geführten Längsschnitt, mit einer schematischen Darstellung der Kornverteilung in seiner Schüttgutsäule,
Fig.4 einen Querschnitt durch einen Doppelschachtofen nach Eig.1 oder 2 und
Fig.5 eine vergrösserte Teildarstellung des Doppelschachtofens nach Fig.3 im Bereich seiner Beschickungsanordnung, mit einer zur Darstellung in Fig.2 um 90° versetzten Schnittebene.

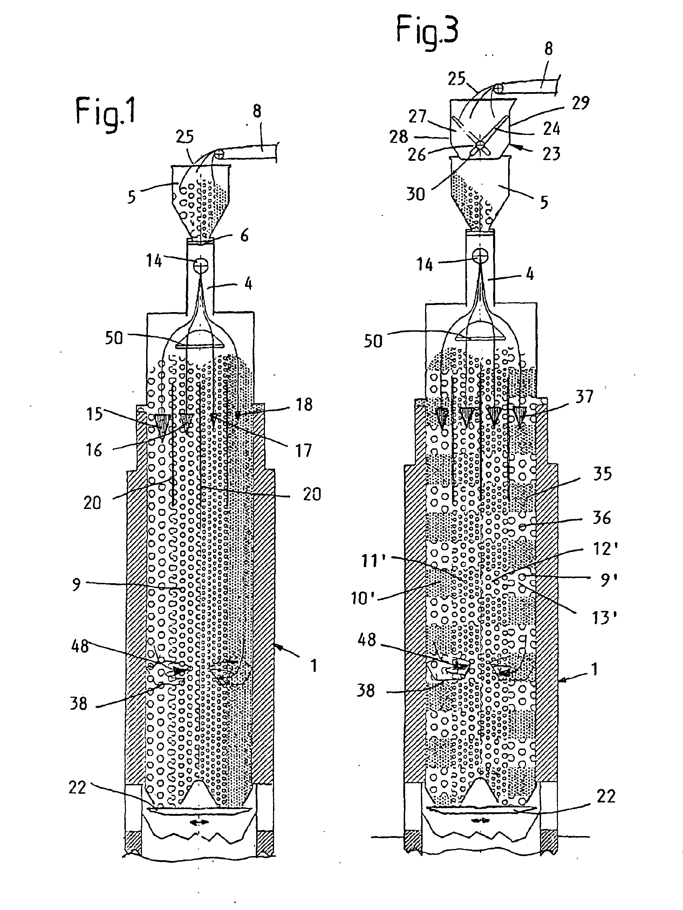

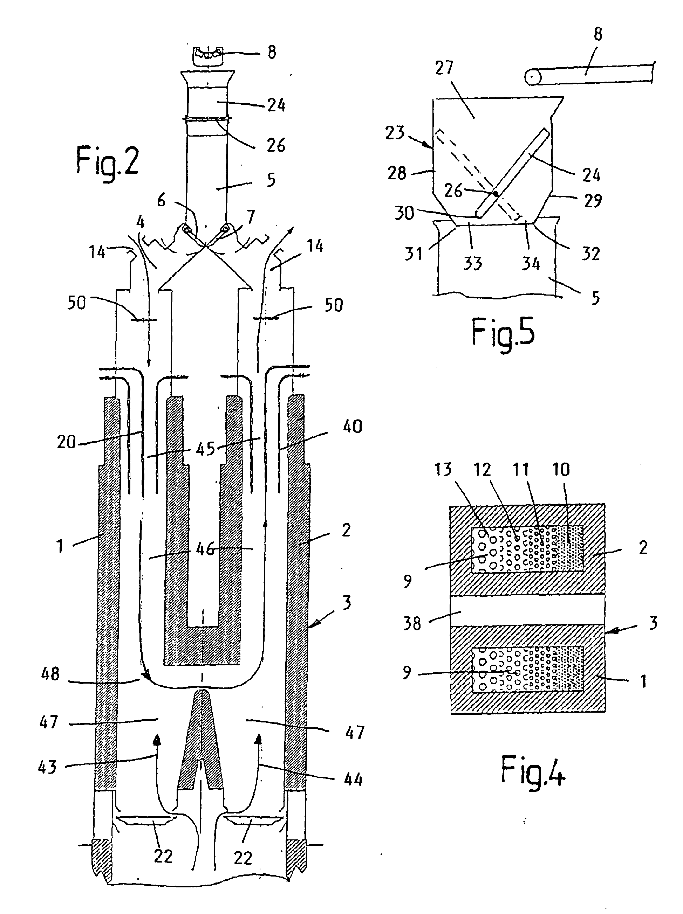

Die Fig.1 zeigt einen von zwei Schächten 1,2 eines nach dem MAERZ-Gleichstrom-Regenerativ-Verfahren zu betreibenden Doppelschachtofens 3 bekannter Ausführung. Sein grundsätzlicher Aufbau kann aus der Darstellung einer erfindungsgemässen Ausführung nach Fig.2 entnommen werden.

Die Beschickung der Schächte 1 und 2 durch ein körniges, mineralisches Materialgemisch erfolgt abwechselnd durch Entleeren einer am oberen Ende eines Beschickungsschachtes 4 angeordneten Beschickungskammer 5, indem jeweils einer der bodenseititigen Kammerverschlüsse 6,7 geöffnet wird. Um dabei das Materialgemisch auf den gegenüber dem Beschickungsschacht 4 grösseren Querschnitt des betreffenden Ofenchachtes 1,2 zu verteilen, ist im oberen Schachtbereich jeweils eine Stauplatte 50 angeordnet, von der aus es in den äusseren Querschnittsbereich abgelenkt wird. Es hat sich dabei gezeigt, dass die in der Beschickungskammer 5 sich ergebende, quer und in Wurfrichtung des Förderbandes 8 gerichtete Entmischung der Kornverteilung bis zur Aufnahme auf der Schüttgutsäule 9 im Wesentlichen erhalten bleibt.

In den Schnittdarstellungen der Fig.1 und Fig.4 sind die in Wurfrichtung des Förderbandes kontinuierlich zunehmenden Korngrössen, zur Vereinfachung der Darstellung, mit vier Grössenabstufungen 10 bis 13 schematisch dargestellt.

Die somit quer zum Schacht 1,2 in einer Richtung sich ändernde Korngrösse der Schüttgutsäule 9 bewirkt, dass auch die Strömungswiderstände für die über den Lufteinlass 14 zuströmende Verbrennungsluft entsprechend verteilt sind. Sie sind bekanntlich in dritter Potenz von der Grösse des Lückenvolumens der jeweiligen Kornschüttung abhängig. Die entsprechend unterschiedliche Luftmengenverteilung ist in Fig.1 durch unterschiedlich grosse Pfeile 15 bis 18 veranschaulicht. Sie hat zur Folge, dass die Verbrennung des über die Brennlanzen 20 zuströmenden, gasförmigen, flüssigen oder staubförmigen Brennstoffs zu Brenngasströmen führt, die quer zur Richtung der Schüttgutsäule entsprechend der Korngrössenverteilung in ihrer Menge unterschiedlich sind, so dass sich in Richtung quer zur Schüttgutsäule 9 erhebliche Temperaturunterschiede von z.B. 300° C ergeben können. Das im Bodenbereich des Schachtes 1,2 über eine Austragsvorrichtung 22 abgeführte körnige, mineralische Produkt hat folglich Körner mit erheblich unterschiedlichem Brenngrad. Da der Grad der entsprechenden Qualitätsunterschiede von der Querschnittslänge des jeweiligen Ofenschachtes 1,2 abhängig ist, können diese Unterschiede ab einer bestimmten Grösse von z.B. 6 m² des Schachtquerschnittes nicht mehr akzeptiert werden.

Um die genannte Grössenbeschränkung für Schachtöfen mit länglichem bzw. rechteckförmigem Querschnitt seiner Schächte entsprechend der Darstellung in Fig.4 zu überwinden und entsprechend ihre kostengünstige Bauweise für grosse Durchsatzmengen und bei guter Produktqualität zu verwirklichen, hat ein erfindungsgemässer Schachtofen z.B. entsprechend dem Ausführungsbeispiel nach Fig.2 und 3 oberhalb seiner schachtförmigen, im Querschnitt rechteckförmigen Beschickungskammer 5 eine Vorrichtung 23 zur periodischen Änderung der Richtung, mit der die Korngrössen des Materialgemischs in der Beschickungskammer 5 quer zur vertikalen Kammerachse zunehmen.

Entsprechend dem dargestellten Ausführungsbeispiel ist diese Vorrichtung 23 auf einfachste Weise durch eine schwenkbare Platte 24 verwirklicht, die in den Wurfbahnen 25 angeordnet ist, mit denen die Körner des Materialgemischs die Fördereinrichtung 8 verlassen. Sie lässt sich um eine horizontale Achse 26 in einander entgegengesetzte Neigungsrichtungen schwenken, so dass die Richtung, mit der die Korngrössen des Materialgemischs in der Beschickungskammer 5 quer zur vertikalen Kammerachse sich verändern lediglich durch Schwenken der Platte 24 umgekehrt wird.

Die Platte 24 ist beispielsweise im mittleren Bereich einer oberhalb der Beschickungskammer 5 angeordneten, oben und unten offenen Umlenkkammer 27 gelagert, derart, dass sie wahlweise an einer in Wurfrichtung hinteren oder vorderen Wand 28,29 der Umlenkkammer 27 anliegt und dabei wechselnd zwischen der Plattenunterkante 30 und einem unteren Öffnungsrand 31,32 einen vorderen und hinteren Auslass 33,34 freigibt. Dabei sind vorzugsweise die beiden jeweils der Unterkante 30 der Platte 24 gegenüberliegenden Wände 28,29 der Umlenkkammer 27 in ihrem unteren Bereich nach innen geneigt ausgeführt.

Das Wechseln der Schwenkrichtung der Platte 24 erfolgt periodisch in vorzugsweise gleichen Zeitabständen und beispielsweise nach jedem periodischen Entleeren der Beschickungskammer 5 durch Öffnen ihres Kammerverschlusses 6,7, so dass sich in der Schüttgutsäule aufeinanderfolgende Schichten 35,36 mit quer zur Schachtrichtung entgegengesetzter Charakteristik der Kornverteilung ergeben, wie es in Fig.3 durch die Kornabstufungen 10', 11', 12', 13' schematisch dargestellt ist. Folglich kann die Verbrennungsluft bei der Durchströmung der Schüttgutsäule 9'nicht mehr einseitig bevorzugte Bahnen nehmen, wie es in Fig.1 veranschaulicht wurde, sondern erhält eine gleichmässige Verteilung, wie es in Fig.3 durch die gleichgrossen Pfeile 37 veranschaulicht ist.

Die Anwendung der Erfindung ist besonders vorteilhaft an einem Gleichstrom-Regenerativ-Ofen nach MAERZ, da sie es ermöglicht, einen solchen mit rechteckförmigem Querschnitt seiner Schächte 1,2 in grosser Bauweise bzw. für grosse Materialdurchsätze zu verwirklichen. Solche Schächte sind einfacher als Bauwerk zu errichten. Ausserdem kann die erforderliche Querverbindung 38 zwischen den Schächten 1,2, im Vergleich zu einer Querverbindung zwischen Rundschächten, erheblich einfacher gestaltet werden.

In Folgenden wird die an sich bekannte Funktionsweise des MAERZ-Ofens nach Fig.2 kurz erläutert.

In Intervallen von beispielsweise 15 Minuten wird jeweils nur ein Schacht 1 oder 2 beheizt, indem die Brennstoffzufuhr über die Lanzen 20 bzw. 40 und die Zuleitung von Verbrennungsluft über die Luftöffnungen 14 entsprechend periodisch nur zu einem Schacht 1 oder 2 erfolgt. Die Zufuhr von Kühlluft von unten in Richtung der Pfeile 43,44 hingegen erfolgt kontinuierlich. Somit ergibt sich in der jeweiligen Füllgutsäule 9'eine obere Vorwärmzone 45, eine mittlere Brennzone 46 und eine untere Kühlzone 47. Die Verbrennungsgase verlassen die Brennzone 46 über den Verbindungskanal 38 in Richtung des Pfeiles 48 in den benachbarten Schacht 2 und steigen in diesem nach oben, so dass sie dort das Füllgut des anderen Schachtes 2 vorwärmen und den Schacht in Richtung zu der Luftöffnung 14 verlassen. Dabei erstreckt sich der Verbindungskanal 38 zwischen zwei einander gegenüberliegenden längeren Seiten des Querschnitts der Schächte 1,2, so dass die Überströmung der Brenngasse zum anderen Schacht sofort gleichmässig den gesamten Schachtquerschnitt erfasst.

Nach der intervallmässigen Umschaltung der Brennstoffzufuhr auf die Lanzen 40 und nach der Zufuhr von Verbrennungsluft auf die Luftöffnung 14 des anderen Schachtes 2 kehrt sich die Strömungsrichtung der Verbrennungsgase um, so dass der Pfeil 48 dann umgekehrt gerichtet ist. Die chargenweise Beschickung der Ofenschächte 1,2 durch Öffnen jeweils einer der Verschlüsse 6,7 der Beschickungskammer 5 erfolgt in gleichen Intervallen wie der beschriebene Wechsel der Betriebsweisen in den beiden Ofenschächten 1,2 und beispielsweise im jeweils gleichen Intervall oder z.B. nach zwei, vier oder sechs Intervallen kann auch die Platte 24 der Umlenkkammer 27 geschwenkt werden.

## Patentansprüche

1. Verfahren zum Brennen eines mineralischen Materialgemischs unterschiedlicher Korngrösse in einer gasdurchströmten Schüttgutsäule(9), die durch Beschicken mindestens eines Schachtes (1,2) eines Schachtofens ausgebildet wird und mit Abführung des gebrannten Produkts im Bodenbereich des Schachtes (1,2), **dadurch gekennzeichnet, dass** eine beim Beschicken erfolgende, gerichtete Entmischung mit zunehmender Korngrösse periodisch in ihrer Richtung geändert wird, so dass die gerichtete Korngrössenverteilung in der Schüttgutsäule (9')schichtweise wechselt.

2. Verfahren nach Anspruch 1, **dadurch gekennzeichnet, dass** das Ändern der Richtung zunehmender Korngrösse mittels einer Rutsche (24) erfolgt, deren Förderrichtung durch Schwenken periodisch in eine entgegengesetzte Richtung gewechselt wird.

3. Verfahren nach Anspruch 2, **dadurch gekennzeichnet, dass** die Förderrichtung der Rutsche (24) nach jeder chargenweisen Entleerung einer Beschickungskammer (5) oder nach mehreren chargenweisen Entleerungen derselben umgekehrt wird, so dass das Volumen der Schichten (35,36) der Schüttgutsäule (9') mit einander entgegengesetzt gerichteter Entmischungsverteilung dem Volumen einer oder mehrerer Chargen entspricht.

4. Verfahren nach einem der Ansprüche 1 bis 3, **dadurch gekennzeichnet, dass** die beiden wechselnden Förderrichtungen der Rutsche (24), bezogen auf einen im Querschnitt länglichen Schacht (1,2), parallel zu einer Ebene verlaufen, die der Längsrichtung des Schachtquerschnittes entspricht.

5. Verfahren nach einem der Ansprüche 1 bis 4 , **dadurch gekennzeichnet, dass** die Richtung der Korngrössenverteilung nach einer oder mehreren Umsteuerungen der Entleerung einer Beschickungskammer (5) in einen von mehreren Schächten (1,2) eines Mehrschachtofens nach dem Gleichstrom-Regenerativ-Verfahren gewechselt wird.

6. Schachtofen zur Durchführung eines Verfahrens nach Anspruch 1, mit mindestens einem im Querschnitt länglichen oder rechteckigen Schacht (1,2), einer Fördereinrichtung (8) für die Zufuhr von im Gasstrom zu brennendem, körnigem Materialgemisch über eine Wurfbahn (25) in eine oberhalb des Schachtes (1,2) angeordnete Beschickungskammer (5), die nach unten durch eine Schliessvorrichtung (6,7) begrenzt ist, zum chargenweisen Beschicken des mindestens einen Schachtes (1,2), **gekennzeichnet durch** eine Vorrichtung (23) zur periodischen Änderung der Richtung, mit der die Korngrössen des Materialgemischs in der Beschickungskammer quer zur vertikalen Kammerachse zunehmen, so dass die im Ofenschacht gebildete Korngrössenverteilung in der Schüttgutsäule (9') schichtweise wechselt.

7. Schachtofen nach Anspruch 6, **dadurch gekennzeichnet, dass** die Vorrichtung (23) zur periodischen Richtungsänderung durch eine an der Wurfbahn (25) angeordnete Rutsche (24) gebildet ist, die um eine horizontale Achse (26) in einander entgegengesetzte Neigungsrichtungen schwenkbar ist.

8. Schachtofen nach Anspruch 7, **dadurch gekennzeichnet, dass** die Rutsche aus einer Platte (24) besteht, die im mittleren Bereich einer oberhalb der Beschickungskammer (5) angeordneten, oben und unten offenen Umlenkkammer (27) schwenkbar gelagert ist, so dass sie wahlweise an einer in Richtung der Wurfbahn (25) hinteren oder vorderen Wand (28,29) der Umlenkkammer (27) anliegt und dabei wechselnd zwischen der Plattenunterkante (30) und einem unteren Öffnungsrand (31) einen vorderen und hinteren Auslass (33,34) freigibt.

9. Schachtofen nach Anspruch 8, **dadurch gekennzeichnet, dass** die beiden jeweils der Unterkante (30) der Platte (24) gegenüberliegenden Wände (28,29) der Umlenkkammer (27) in ihrem unteren Bereich nach innen geneigt sind.

10. Schachtofen nach einem der Ansprüche 6 bis 9, **dadurch gekennzeichnet, durch** zwei über einen Querkanal (38) für Verbrennungsgase (48) miteinander verbundene Schächte. (1,2) mit rechteckigem Querschnitt, wobei der Querkanal (38) zwei einander gegenüberliegende längere Seiten des Querschnitts der Schächte (1,2) miteinander verbindet und der freie, jeweils durch eine Schüttgutsäule ausgefüllte Querschnitt der Schächte (1,2) grösser ist als 6,5 m².

## Claims

1. Method for burning a mineral material mixture of differing grain size in a bulk material column (9) through which flows a gas and which is formed by charging at least one shaft (1, 2) of a shaft furnace and with removal of the burnt product in the bottom area of the shaft (1, 2), **characterized in that** a directed separation taking place on charging periodically changes direction with increasing grain size, so that the directed grain size direction in the bulk material column (9') changes in layers.

2. Method according to claim 1, **characterized in that** the change to the increasing grain size direction takes place by means of a chute, whose feed direction is periodically reversed by pivoting.

3. Method according to claim 2, **characterized in that** the feed direction of the chute (24) is reversed following each batchwise emptying of a charging chamber (5) or following several batchwise emptyings thereof, so that the volume of the layers (35, 36) of the bulk material column (9') with opposing, directed separation distribution corresponds to the volume of one or more batches.

4. Method according to one of the claims 1 to 3, **characterized in that** the two changing feed directions of the chute (24), based on a cross-sectionally elongated shaft (1, 2), run parallel to a plane corresponding to the longitudinal direction of the shaft cross-section.

5. Method according to one of the claims 1 to 4, **characterized in that** the direction of the grain size distribution is changed following one or more reversals of the emptying of a charging chamber (5) in one of several shafts (1, 2) of a multishaft furnace according to the uniflow regenerative process.

6. Shaft furnace for performing a method according to claim 1, having at least one cross-sectionally elongated or rectangular shaft (1, 2), a conveyor (8) for the supply of granular material mixture to be burned in the gas flow by means of a trajectory (25) in a charging chamber (5) positioned above the shaft (1, 2), which is downwardly bounded by a closure (6, 7), for the batchwise charging of at least one shaft (1, 2), **characterized by** a device (23) for periodically changing the direction with which the grain sizes of the material mixture in the charging chamber increase transversely to the vertical chamber axis, so that the grain size distribution formed in the furnace shaft changes in layers in the bulk material column (9').

7. Shaft furnace according to claim 6, **characterized in that** the device (23) for periodic direction change is formed by a chute (24) located on the trajectory (25) and which is pivotable about a horizontal axis (26) in opposing inclination directions.

8. Shaft furnace according to claim 7, **characterized in that** the chute comprises a plate (24), which is pivotably mounted in the central area of a guide chamber (27), which is open at the top and bottom and which is located above the charging chamber (5), so that, as desired, it engages on a wall (28, 29) of the guide chamber (27), which is at the rear or front in the direction of the trajectory (25) and frees a front and rear outlet (33, 35) in alternating manner between the plate lower edge (30) and a lower opening edge (31).

9. Shaft furnace according to claim 8, **characterized in that** the two walls (28, 29) of the guide chamber (27) facing the lower edge (30) of the plate (24) are inwardly inclined in their lower area.

10. Shaft furnace according to one of the claims 6 to 9, **characterized in that** two shafts (1, 2) having a rectangular cross-section and interconnected by means of a cross connection (38) for combustible gases (48), said cross connection (38) interconnecting two facing, longer sides of the cross-section of the shafts (1, 2) and the free cross-section of the shafts (1, 2), in each case filled by a bulk material column, exceeds 6.5 m².

## Revendications

1. Procédé pour brûler un mélange de matériaux minéraux de différente granulométrie dans une colonne de matière en vrac traversée par du gaz (9), laquelle est réalisée par l'alimentation d'au moins une cuve (1, 2) d'un fourneau à cuve, et comprenant l'évacuation du produit brûlé dans la zone de fond de la cuve (1, 2), **caractérisé en ce qu'**une dissociation ayant lieu pendant l'alimentation avec une granulométrie qui augmente dans une direction est modifiée dans sa direction par le changement périodique de la direction d'alimentation, de telle sorte que la répartition granulométrique dirigée dans la colonne de matière en vrac (9') change couche par couche.

2. Procédé selon la revendication 1, **caractérisé en ce que** le changement de la direction d'une granulométrie qui augmente a lieu au moyen d'une goulotte (24) dont la direction de convoyage est modifiée périodiquement dans une direction opposée par pivotement.

3. Procédé selon la revendication 2, **caractérisé en ce que** la direction de convoyage de la goulotte (24) est inversée après chaque vidage effectué charge par charge d'une chambre d'alimentation (5) ou après plusieurs vidages effectués charge par charge de celle-ci, de telle sorte que le volume des couches (35, 36) de la colonne de matière en vrac (9') les unes avec les autres à l'opposé d'une répartition de dissociation dirigée, correspond au volume d'une ou de plusieurs charges.

4. Procédé selon l'une des revendications 1 à 3, **caractérisé en ce que** les deux directions de convoyage changeantes de la goulotte (24) s'étendent parallèlement à un plan qui correspond à la direction longitudinale de la section transversale de la cuve, en référence à une cuve (1, 2) allongée dans la section transversale.

5. Procédé selon l'une des revendications 1 à 4 , **caractérisé en ce que** la direction de la répartition granulométrique après une ou plusieurs inversions de commande du vidage d'une chambre d'alimentation (5) est modifiée dans une cuve parmi plusieurs cuves (1, 2) d'un fourneau à plusieurs cuves selon le procédé de régénération à courant continu.

6. Fourneau à cuve pour exécuter un procédé selon la revendication 1, comprenant au moins une cuve (1, 2) allongée dans la section transversale ou rectangulaire, un dispositif de convoyage (8) pour l'apport d'un mélange de matériau granuleux, à brûler dans le flux de gaz, par l'intermédiaire d'une trajectoire de projection (25) jusque dans une chambre d'alimentation (5) qui est agencée au-dessus de la cuve (1, 2) et qui est limitée vers le bas par un dispositif de fermeture (6, 7), pour l'alimentation charge par charge de la au moins une cuve (1, 2), **caractérisé par** un dispositif (23) pour le changement périodique de la direction, avec lequel les granulométries du mélange de matériaux dans la chambre d'alimentation augmentent transversalement à l'axe vertical de la chambre, de telle sorte que la répartition granulométrique formée dans la cuve de fourneau dans la colonne de matière en vrac (9') change couche par couche.

7. Fourneau à cuve selon la revendication 6, **caractérisé en ce que**, pour le changement périodique de la direction, le dispositif (23) est formé par une goulotte (24) agencée sur la trajectoire de projection (25), laquelle peut être pivotée autour d'un axe horizontal (26) dans des directions d'inclinaison opposées l'une à l'autre.

8. Fourneau à cuve selon la revendication 7, **caractérisé en ce que** la goulotte est constituée d'une plaque (24) qui est montée avec faculté de pivotement dans la zone centrale d'une chambre de déviation (27) agencée au-dessus de la chambre d'alimentation (5), et ouverte en bas et en haut, de telle sorte qu'elle vient s'appliquer au choix sur une paroi arrière ou avant (28, 29) - dans la direction de la trajectoire de projection (25) - de la chambre de déviation (27) et libère alors une sortie avant et arrière (33, 34) en alternant entre l'arête inférieure de la plaque (30) et un bord d'ouverture inférieur (31).

9. Fourneau à cuve selon la revendication 8, **caractérisé en ce que** les deux parois (28, 29) de la chambre de déviation (27), placées respectivement à l'opposé de l'arête inférieure (30) de la plaque (24), sont inclinées vers l'intérieur dans leur zone inférieure.

10. Fourneau à cuve selon l'une des revendications 6 à 9, **caractérisé par** deux cuves (1, 2) reliées entre elles par un canal transversal (38) pour des gaz de combustion (48) et présentant une section transversale rectangulaire, fourneau dans lequel le canal transversal (38) relie entre eux deux côtés plus longs opposés de la section transversale des cuves (1, 2) et dans lequel la section transversale libre des cuves (1, 2), laquelle est remplie respectivement par une colonne de matière en vrac, est supérieure à 6,5 m².
